# NEUE EUROPÄISCHE PATENTSCHRIFT

(11) **EP 0 397 841 B2**
(45) Veröffentlichungstag und Bekanntmachung des Hinweises auf die Entscheidung über den Einspruch: **03.01.1996**
(45) Hinweis auf die Patenterteilung: 21.10.1992
(21) Anmeldenummer: 90900118.2
(22) Anmeldetag: 04.12.1989
(51) Int. Cl.: F16L 11/12, B32B 27/18, B32B 27/16

(54) **KUNSTSTOFFTEIL FÜR BRENNBARE MEDIEN MIT FLAMMSCHUTZ UND VERFAHREN ZU DESSEN HERSTELLUNG**
PLASTIC PART FOR COMBUSTIBLE MEDIA WITH FLAME PROTECTION AND PROCESS FOR MANUFACTURING IT
PIECE IGNIFUGEE EN MATIERE PLASTIQUE POUR MILIEUX COMBUSTIBLES ET LEUR PROCEDE DE PRODUCTION

(30) Priorität: 03.12.1988 DE 3840750
(43) Veröffentlichungstag der Anmeldung: 22.11.1990
(73) Patentinhaber: DEUTSCHE TECALEMIT GMBH, D-33659 Bielefeld (DE)
(72) Erfinder: STRASZEWSKI, Klaus, D-4837 Verl 1 (DE); STENGLIN, Uwe, D-8801 Tauberzell 29 A (DE)
(74) Vertreter: Patentanwälte Dipl.-Ing. Bodo Thielking Dipl.-Ing. Otto Elbertzhagen
(86) Internationale Anmeldenummer: EP8901477
(87) Internationale Veröffentlichungsnummer: WO9006467

(56) Entgegenhaltungen:
- EP-A- 0 240 072
- EP-A- 0 280 066
- DE-A- 2 324 483
- DE-A- 2 453 238
- DE-C- 2 915 188
- FR-A- 2 334 042

## Beschreibung

### TECHNISCHES GEBIET

Die Erfindung betrifft eine Kraftstoffleitung nach dem Oberbegriff des Anspruchs 1 und ein Verfahren zu deren Herstellung nach dem Oberbegriff eines der Ansprüche 10 bis 12.

### STAND DER TECHNIK

Es ist bekannt, Kraftstoffleitungen für Automobile aus Polyamid herzustellen. Diese bekannten Kraftstoffleitungen haben jedoch den Nachteil, daß ihr Widerstand gegen Hitze und Brand vergleichsweise gering ist. So werden bei Prüfungen mit einem äußeren Temperaturniveau von 600° bis 650° Standzeiten bis zum Aufreißen der Kraftstoffleitungen von nur ca. 15 Sekunden bei Leitungen erreicht, die einen Außendurchmesser von 6 mm und einen Innendurchmesser von 1,4 mm aufweisen.

Wesentlich höhere Standzeiten in der Größenordnung von 3 Minuten werden erzielt, wenn man derartige Kraftstoffleitungen aus Polytetrafluorethylen (PTFE) herstellt. Eine solche Lösung ist jedoch sehr teuer und bringt zusätzlich erhebliche technische Probleme mit sich: Da PTFE unter mechanischer und thermischer Belastung stark fließt, werden sehr leicht die Anschlüsse undicht

Es ist auch bereits eine aus zwei Schichten thermoplastischen Materials und besonders für den Transport von feuergefährlichen Mitteln geeignete Leitung bekannt (DE-A-23 24 483), deren innere Schicht aus einem polymeren Material besteht, das sich bei Erwärmung auf eine vorherbestimmte Temperatur ausdehnt. Die Ausdehnung wird dazu benutzt, daß der Durchströmungskanal blockiert wird.

Eine Blockierung des Strömungskanals unter Ausnutzung der Materialausdehnung nach innen führt zwar zu einer gewissen Sperrwirkung gegen nachlaufende feuergefährliche Flüssigkeit, diese Blockierung hat jedoch den Nachteil, daß wegen der fehlenden Durchströmung die Leitung nicht von innen gekühlt wird durch die duchströmende Flüssigkeit.

Es ist ferner eine Kraftstoffleitung bekannt (DE-A-24 53 238), die zweischichtig aufgebaut ist. Dabei besteht die Innenschicht aus thermoplastischem Kunststoff und die umgebende Außenschicht besteht ebenfalls aus thermoplastischem Kunststoff, der ein schaumbildendes Treibmittel enthält. Diese bekannte Kraftstoffleitung wird den heute an Kraftstoffleitungen gestellten Forderungen nicht gerecht, und zwar weder hinsichtlich mechanischer Eigenschaften, noch hinsichtlich der Standfestigkeit gegen chemische Einflüsse durch Treibstoffe und Bremsflüssigkeit, noch hinsichtlich der Flammfestigkeit. Das Vorsehen einer schaumbildendes Treibmittel enthaltenden Außenschicht macht die bekannte Kraftstoffleitung anfällig gegen Beeinträchtigungen durch Kraftstoffe bzw. Bremsflüssigkeit. Das Vorsehen einer lediglich extrudierten und nicht weiterbehandelten Innenschicht verleiht der bekannten Kraftstoffleitung eine nicht ausreichende Standfestigkeit gegen Innendruck bei Erwärmung, also im Brandfall.

Es ist ferner noch ein kunststoffisoliertes elektrisches Kabel mit flammwidrigem Innenmantel bekannt (DE 29 15 188 C2). Die bekannte Druckschrift befaßt sich nicht mit der speziellen Problematik, die sich aus der Gestaltung einer Kraftstoffleitung ergibt, also einer Leitung, durch die hoch brennbare Flüssigkeiten geleitet werden, wobei außerdem diese Kraftstoffleitung auch im Normalfall, also ohne Brand, hohen Anforderungen an die Resistenz gegen Mineralölprodukte und Chemikalien ebenso genügen muß, wie hohen mechanischen Anforderungen.

### DIE ERFINDUNG

Ausgehend von diesem Stand der Technik liegt der Erfindung die Aufgabe zugrunde, eine Kraftstoffleitung für Kraftfahrzeuge herzustellen, welche ohne technische Probleme einsetzbar und preisgünstig herstellbar ist, wobei diese Kraftstoffleitung, verglichen mit bisher bekannten thermoplastischen Kunststoffleitungen, eine wesentlich höhere Standzeit bei hoher Temperaturen aufweist.

Die Lösung dieser Aufgabe erfolgt mit den Merkmalen des Anspruchs 1. Die Kraftstoffleitung kann nach einem Verfahren gemäß einem der Ansprüche 10 bis 12 hergestellt sein.

Die Ausbildung mindestens einer Schicht aus vernetztem Kunststoff verleiht dieser Schicht eine erhebliche mechanische und thermische Festigkeit. Diejenige Schicht, welche ein schaumbildendes Treibmittel enthält, schäumt erst bei einer erheblich über der Verarbeitungstemperatur liegenden Außentemperatur auf. Wenn die das Treibmittel enthaltende Schicht aufschäumt, führt dies einerseits zu einer besonders guten thermischen Isolierung der die brennbaren Medien enthaltenden Innenschicht mit der Folge, daß die hohe Temperatur erst nach einer vergleichsweise langen Einwirkungszeit die Innenschicht ernsthaft beeinträchtigt. Andererseits führt das Aufschäumen der hierfür vorgesehenen Schicht auch dazu, daß die Innenschicht besonders lange und wirksam gegen Sauerstoffzutritt abgeschlossen wird. Es entsteht also ein guter und sehr wirksamer Brandschutz.

Dieser gute Brandschutz wird noch verbessert, wenn die das schaumbildende Treibmittel enthaltende Schicht von einer nicht treibmittelhaltigen Schicht überdeckt wird. Das Vorsehen einer zusätzlichen nicht treibmittelhaltigen Außenschicht führt zu weiteren drastischen Erhöhungen der Standzeiten von Kraftstoffleitungen bei Wärme- oder Feuereinwirkung gegenüber einer Ausführung, die keine nicht treibmittelhaltige Außenschicht aufweist.

Eine weitere Verbesserung des Brandschutzes erfolgt dadurch, daß mindestens eine derverschiedenen Schichten zusätzlich ein Flammschutzmittel enthält

Weitere Merkmale der Erfindung ergeben sich aus den weiteren Ansprüchen.

### KURZBESCHREIBUNG DER ZEICHNUNGSABBILDUNG

In der Zeichnung zeigen:
Figur 1 einen Längsschnitt durch ein Teilstück eines Kraftstoffschlauchs,
Figur 2 einen Längsschnitt durch ein weiteres Teilstück eines Kraftstoffschlauchs mit einem aufgeschäumten Bereich.

### BESTER WEG ZUR AUSFÜHRUNG DER ERFINDUNG

Mit 1 ist die Innenschicht bezeichnet. Diese Innenschicht wird von einer im Ausführungsbeispiel mittleren Schicht 2 umschlossen. Diese mittlere Schicht 2 ist wiederum von einer Außenschicht umschlossen.

Die verschiedenen Schichten können einzeln nacheinander aufgebracht sein, sie können jedoch auch co-extrudiert sein. Bevorzugt erfolgt die Verbindung der einzelnen Schichten, solange die zusammenliegenden Grenzschichten noch nicht ausgehärtet sind.

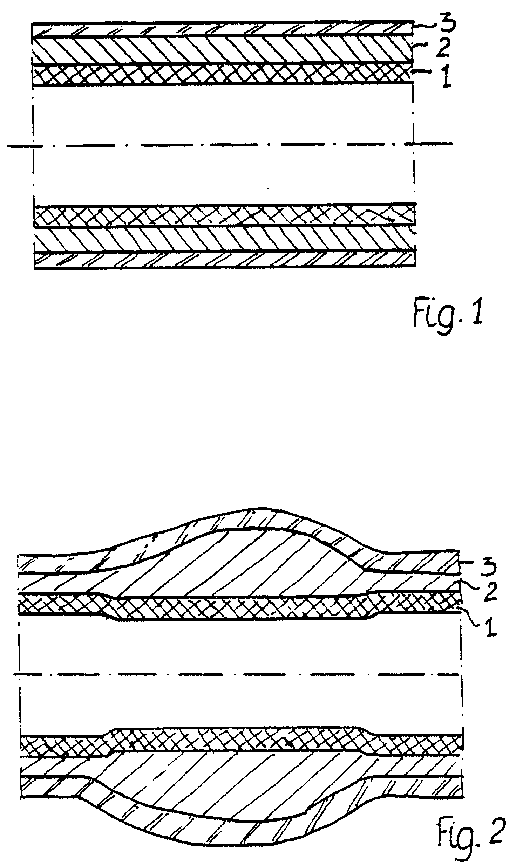

In Figur 1 ist die Kraftstoffleitung im Normalzustand ohne Hitzeeinwirkung gezeigt.

Figur 2 zeigt einen Teilbereich einer Kraftstoffleitung, in der ein bestimmter Bereich absichtlich aufgeschäumt worden ist. Hierdurch entsteht ein erhöhter Wärmeschutz oder auch mechanischer Schutz an Stellen im Motorraum, welche besondere Belastungen mechanischer oder thermischer Art auf die Kraftstoffleitung ausüben.

## Patentansprüche

1. Kraftstoffleitung aus Kunststoff, die eine innere thermoplastische Schicht (1) und eine diese umgebende thermoplastische Schicht (2) aufweist,
wobei die innere Schicht (1) aus einem vernetzten Kunststoff besteht und die umgebende Schicht (2) ein schaumbildendes Treibmittel enthält, dessen die Schaumbildung auslösende Reaktionstemperatur höher liegt als die Verarbeitungstemperatur dieser Schicht (2), wobei die die innere thermoplastische Schicht (1) umgebende zweite Schicht (2) von einer dritten, nicht treibmittelhaltigen Schicht (3) überdeckt ist und wobei mindestens eine der Schichten (1; 2; 3) ein Flammschutzmittel enthält.

2. Kraftstoffleitung nach Anspruch 1,
dadurch gekennzeichnet,
daß die dritte Schicht (3) eine thermoplastische Schicht ist.

3. Kraftstoffleitung nach Anspruch 1 oder 2,
dadurch gekennzeichnet,
daß die mittlere Schicht (2) vernetzt ist.

4. Kraftstoffleitung nach einem oder mehreren der Ansprüche 1 bis 3,
dadurch gekennzeichnet,
daß die äußere Schicht (2) vernetzt ist.

5. Kraftstoffleitung nach einem oder mehreren der Ansprüche 1 bis 4,
dadurch gekennzeichnet,
daß der Kunststoff strahlenvernetzt ist.

6. Kraftstoffleitung nach einem oder mehreren der Ansprüche 1 bis 4,
dadurch gekennzeichnet,
daß der Kunststoff chemisch vernetzt ist.

7. Kraftstoffleitung nach einem oder mehreren der Ansprüche 1 bis 6,
dadurch gekennzeichnet,
daß die innere Schicht (1) aus Polyamid besteht.

8. Kraftstoffleitung nach einem oder mehreren der Ansprüche 1 bis 7,
dadurch gekennzeichnet,
daß mindestens eine der die innere Schicht (1) umgebenden Schichten (2 oder 3)aus Polyamid besteht.

9. Kraftstoffleitung nach einem oder mehreren der Ansprüche 1 bis 8,
dadurch gekennzeichnet,
daß in vorgegebenen Bereichen die treibmittelhaltige Schicht aufgeschäumt ausgebildet ist.

10. Verfahren in dem die Kraftstoffleitung nach einem oder mehreren der Ansprüche 1 bis 9 hergestellt wird,
wobei die einzelnen Schichten (1; 2, 3) miteinander verbunden werden, solange die Grenzschichten noch nicht ausgehärtet, sondern noch plastisch sind.

11. Verfahren, in dem die Kraftstoffleitung nach einem oder mehreren der Ansprüche 1 bis 9 hergestellt wird, wobei nach der Herstellung der inneren Schicht (1) die jeweils weiteren Schichten (2 und 3) nacheinander aufgebracht werden und anschließend die so gebildete Kraftstoffleitung vernetzt wird.

12. Verfahren, in dem die Kraftstoffleitung nach einem oder mehreren der Ansprüche 1 bis 9 hergestellt wird, wobei die verschiedenen Schichten (1; 2; 3) co-extrudiert werden und die Kraftstoffleitung anschließend vernetzt wird.

## Claims

1. Fuel pipe of plastics which has an inner thermoplastics layer (1) and a thermoplastic layer (2) surrounding same,
wherein the inner layer (1) consists of a cross-linked plastics and the surrounding layer (2) contains a foam-forming propellant whose reaction temperature which triggers the formation of foam is higher than the processing temperature of this layer (2) wherein the second layer (2) surrounding the inner thermoplastics layer (1) is covered by a third non-propellant-containing layer (3) and wherein at least one of the layers (1; 2; 3) contains flame retardant means.

2. Fuel pipe according to claim 1 characterised in that the third layer (3) is a thermoplastics layer.

3. Fuel pipe according to claim 1 or 2 characterised in that the middle layer (2) is cross-linked.

4. Fuel pipe according to one or more of claims 1 to 3 characterised in that the outer layer (3) is cross-linked.

5. Fuel pipe according to one or more of claims 1 to 4 characterised in that the plastics is cross-linked by rays.

6. Fuel pipe according to one or more of claims 1 to 4 characterised in that the plastics is chemically cross-linked.

7. Fuel pipe according to one or more of claims 1 to 6 characterised in that the inner layer (1) is made of polyamide.

8. Fuel pipe according to one or more of claims 1 to 7 characterised in that at least one of the layers (2 or 3) surrounding the inner layer (1) is made of polyamide.

9. Fuel pipe according to one or more of claims 1 to 8 characterised in that the propellant-containing layer is formed foamed in predetermined areas.

10. Process in which the fuel pipe according to one or more of claims 1 to 9 is manufactured wherein the individual layers (1; 2; 3) are connected together whilst the boundary layers have not yet set but are still malleable.

11. Process in which the fuel pipe according to one or more of claims 1 to 9 is manufactured wherein after production of the inner layer (1) the additional layers (2 and 3) are applied one after the other and the fuel pipe thus formed is then cross-linked.

12. Process in which the fuel pipe according to one or more of claims 1 to 9 is manufactured wherein the different layers (1; 2; 3) are co-extruded and the fuel pipe is then cross-linked.

## Revendications

1. Conduite de carburant en matière plastique présentant une couche thermoplastique intérieure (1) et une couche thermoplastique (2) entourant celle-ci
caractérisée en ce que la couche intérieure (1) est exécutée en matière plastique réticulée et que la couche l'entourant (2) contient un agent gonflant, moussant dont la température de réaction déterminant le moussage est plus élevée que la température de traitement de cette couche (2), la seconde couche (2) entourant la couche intérieure thermoplastique (1) étant recouverte par une couche 3 ne contenant pas d'agent gonflant, moussant et l'une des couches (1; 2; 3), au moins, contient un agent protégeant contre les flammes.

2. Conduite de carburant selon la revendication 1,
caractérisée en ce que la troisième couche (3) est une couche thermoplastique.

3. Conduite de carburant selon la revendication 1 ou 2,
caractérisée en ce que la couche médiane (2) est réticulée.

4. Conduite de carburant selon l'une ou plusieurs des revendications 1 à 3,
caractérisée en ce que la couche extérieure (3) est réticulée.

5. Conduite de carburant selon l'une ou plusieurs des revendication 1 à 4,
caractérisée en ce que la matière plastique est réticulée par irradiation.

6. Conduite de carburant selon l'une ou plusieurs des revendications 1 à 4,
caractérisée en ce que la matière plastique est réticulée chimiquement.

7. Conduite de carburant selon l'une ou plusieurs des revendications 1 à 6,
caractérisée en ce que la couche intérieure est en polyamide.

8. Conduite de carburant selon l'une ou plusieurs des revendications 1 à 7,
caractérisée en ce que, au moins, l'une des couches (2 ou 3) entourant la couche intérieure (1) est en polyamide.

9. Conduite de carburant selon l'une ou plusieurs des revendications 1 à 8,
caractérisée en ce que la couche contenant un agent gonflant est moussée dans les zones prédéfinies.

10. Procédé selon lequel la conduite de carburant est fabriquée selon l'une ou plusieurs des revendications 1 à 9, les différentes couches (1; 2; 3) étant reliées ensemble pendant que les couches limites ne sont pas encore durcies, mais sont encore plastiques.

11. Procédé selon lequel la conduite de carburant selon l'une ou plusieurs des revendications 1 à 9 est fabriquée, les couches (2 et 3) étant appliquées l'une après l'autre après fabrication de la couche intérieure (1) et la conduite de carburant ainsi formée étant ensuite réticulée.

12. Procédé selon lequel la conduite de carburant selon l'une ou plusieurs de revendications 1 à 9 est fabriquée, les différentes couches (1; 2; 3) étant co-extrudées et la conduite de carburant étant ensuite réticulée.
